# EUROPEAN PATENT SPECIFICATION

(11) **EP 3 070 993 B1**
(45) Date of publication and mention of the grant of the patent: **16.08.2017**
(21) Application number: 13897162.7
(22) Date of filing: 11.11.2013
(51) Int. Cl.: H04W 24/02, H04W 88/08

(54) **BASE STATION ACTIVATION**
BASISSTATIONSAKTIVIERUNG
ACTIVATION DE STATION DE BASE

(43) Date of publication of application: 21.09.2016
(73) Proprietor: Huawei Technologies Co., Ltd., Longgang District Shenzhen, Guangdong 518129 (CN)
(72) Inventor: HU, Guojie, Shenzhen Guangdong 518129 (CN); ZHU, Wei, Shenzhen Guangdong 518129 (CN); WANG, Jiangsheng, Shenzhen Guangdong 518129 (CN); YAN, Weiping, Shenzhen Guangdong 518129 (CN)
(74) Representative: Epping - Hermann - Fischer
(86) International application number: PCT/CN2013/086836
(87) International publication number: WO 2015/066912

(56) References cited:
- CN-A- 101 047 639
- CN-A- 101 188 519
- CN-A- 102 711 106
- CN-B- 101 466 105
- US-A1- 2003 095 520
- US-B2- 7 158 533
- HUAWEI: "Add clarity to eNB Plug&Play deployment scenario", 3GPP DRAFT; S5-130775 PCR R12 32.501 ADD CLARITY TO ENB PLUG&PLAY DEPLOYMENT SCENARIO, 3RD GENERATION PARTNERSHIP PROJECT (3GPP), MOBILE COMPETENCE CENTRE ; 650, ROUTE DES LUCIOLES ; F-06921 SOPHIA-AN , vol. SA WG5, no. Qingdao; 20130415 - 20130419 22 April 2013 (2013-04-22), XP050711121, Retrieved from the Internet: URL:http://www.3gpp.org/ftp/tsg_sa/WG5_TM/ TSGS5_88/Docs/ [retrieved on 2013-04-22]
- T-S JOU, IBM CORPORATION: "Duplicate IP Address Detection Based on Gratuitous ARP; draft-jou-duplicate-ip-address-02.txt", IETF, no. 2, 1 February 1999 (1999-02-01), pages 1-7, XP015030668, ISSN: 0000-0004
- CHESHIRE, APPLE INC S: "IPv4 Address Conflict Detection; rfc5227.txt", IETF, 1 July 2008 (2008-07-01), pages 1-21, XP015057214, ISSN: 0000-0003

## Description

### TECHNICAL FIELD

The present invention relates to communications technologies, and in particular, to a base station provisioning method and a base station provisioning system.

### BACKGROUND

To meet a service development requirement of an operator, a quantity of base stations keeps increasing, and growing costs of base station provisioning draws more attention from the operator. Reducing skills of base station provisioning personnel and accelerating the base station provisioning are important factors for reducing the costs of the base station provisioning.

In the prior art, when a base station is provisioned by an operator, a manner of a Dynamic Host Configuration Protocol (Dynamic Host Configuration Protocol, DHCP) may be used to implement fast and cost-effective base station provisioning. The base station first broadcasts a DHCP request, and a DHCP server allocates an IP address to the base station after the broadcast is received. After acquiring the IP address, the base station may automatically connect to the server and automatically complete, according to a preconfigured task, operations such as base station parameter configuration.

However, because a broadcast storm may be caused after a DHCP relay function is enabled, efficiency of base station provisioning is low.

CN102711106 A discloses a method and system for establishing an IPSec tunnel. The method comprises: an base station requesting a first configuration parameter from a configuration server, and requesting a digital certificate from a CA server according to the first configuration parameter which is responded by the configuration server; the base station establishing a temporary IPSec tunnel to a security gateway according to the acquired digital certificate, and requesting a second configuration parameter from a background network management unit through the temporary IPSec tunnel; and after acquiring the second configuration parameter, the base station dismantling the temporary IPSec tunnel, and establishing a permanent IPSec tunnel between itself and the security gateway according to the second configuration parameter.

US 2003/0095520 A1 discloses a method to automatically assign an identifier like a packet data address to a new node. In general, the automatic assignment of such an identifier to a network entity, node, or host includes two steps. First, an initial message is transmitted by the entity which specifies or indicates in some way geographical location information for the entity. Second, using the geographical location information in that message, an identifier is assigned and provided to that entity. In other words, a relationship is established between the geographical location of an entity identifier and its associated identifier. The geographical location information uniquely identifies the entity in the automatic identifier assignment process.

### SUMMARY

Embodiments of the present invention provide a base station provisioning method and a base station provisioning system as defined in the claims, so as to improve efficiency of base station provisioning.

According to a first aspect, an embodiment provides a base station, including:
a first sending module, configured to send an Internet Protocol IP query request to a router, so that the router sends the IP query request to a server, where the IP query request includes identification information of the base station and a temporary IP address of the base station;
a first receiving module, configured to receive an IP query request response that is forwarded by the router to the base station according to the temporary IP, where the IP query request response carries a formal IP address that is allocated by the server to the base station according to the identification information of the base station;
a second sending module, configured to send a provisioning request to the router, so that the router sends the provisioning request to the server, where the provisioning request carries the formal IP address; and
a second receiving module, configured to receive a provisioning response that is forwarded by the router to the base station according to the formal IP, where the provisioning response carries a base station start parameter that is configured by the server for the base station.

With reference to the first aspect, in a first possible implementation manner of the first aspect, the first receiving module is further configured to: before the first sending module sends the IP query request to the router, receive a first Address Resolution Protocol ARP request sent by the router, where the first ARP request carries an IP address and a Media Access Control MAC address that are of the router; determine, according to the IP address of the router, a network segment in which the base station is located; and acquire, according to the network segment, the temporary IP address corresponding to the network segment.

With reference to the first possible implementation manner of the first aspect, in a second possible implementation manner of the first aspect, the first sending module is further configured to: after the first receiving module receives the first ARP request sent by the router, send a gratuitous ARP response to the router according to the IP address of the router, where the gratuitous ARP response carries a MAC address of the base station.

With reference to the first aspect, or the first or the second possible implementation manner of the first aspect, in a third possible implementation manner of the first aspect, the IP query request response further includes: identification information of another base station, except the base station, in the network segment in which the base station is located, and a formal IP address corresponding to the another base station.

With reference to the first aspect, or the first to the third possible implementation manners of the first aspect, in a fourth possible implementation manner of the first aspect, after the first sending module sends the IP query request to the router, if the first receiving module does not receive the IP query request response within a set time, the first sending module is further configured to: send the gratuitous ARP request to the router, so that the router updates a correspondence between the temporary IP address and the MAC address that are of the base station; and resend the IP query request to the router, so that the router sends the IP query request to the server.

With reference to the first aspect, or the first to the fourth possible implementation manners of the first aspect, in a fifth possible implementation manner of the first aspect, the first sending module is further configured to: send a second ARP request before sending the IP query request to the router, where a destination address of the second ARP request is the temporary IP address; and if an ARP response to the second ARP request is received, resend the ARP request after a set first time, until the ARP response is not received by the first sending module within a set second time.

According to a second aspect, an embodiment provides a router, including:
a first receiving module, configured to: receive an Internet Protocol IP query request sent by a base station, and send the IP query request to a server, where the IP query request includes identification information of the base station and a temporary IP address of the base station;
a first sending module, configured to forward an IP query request response to the base station according to the temporary IP, where the IP query request response carries a formal IP address that is allocated by the server to the base station according to the identification information of the base station;
a second receiving module, configured to: receive a provisioning request sent by the base station, and forward the provisioning request to the server, where the provisioning request carries the formal IP address; and
a second sending module, configured to forward a provisioning response to the base station according to the formal IP, where the provisioning response carries a base station start parameter that is configured by the server for the base station.

With reference to the second aspect, in a first possible implementation manner of the second aspect, the first sending module is further configured to: before the first receiving module receives the IP query request sent by the base station, send a first Address Resolution Protocol ARP request to the base station, where the first ARP request carries an IP address and a Media Access Control MAC address that are of the router, so that the router determines, according to the IP address of the router, a network segment in which the base station is located, and acquire, according to the network segment, the temporary IP address corresponding to the network segment.

With reference to the second aspect, in a second possible implementation manner of the second aspect, the first receiving module is further configured to: after the first sending module sends the first ARP request to the base station, receive a gratuitous ARP response sent by the base station according to the IP address of the router, where the gratuitous ARP response carries a MAC address of the base station.

With reference to the second aspect, or the first or the second possible implementation manner of the second aspect, in a third possible implementation manner of the second aspect, the IP query request response further includes: identification information of another base station, except the base station, in the network segment in which the base station is located, and a formal IP address corresponding to the another base station.

With reference to the second aspect, or the first to the third possible implementation manners of the second aspect, in a fourth possible implementation manner of the second aspect, after the first receiving module receives the IP query request sent by the base station, if the base station does not receive the IP query request response within a set time, the first receiving module is further configured to: receive the gratuitous ARP request sent by the base station, and update a correspondence between the temporary IP address and the MAC address; and receive the IP query request resent by the base station, and send the IP query request to the server.

According to a third aspect, an embodiment provides a server, including:
a first receiving module, configured to receive an Internet Protocol IP query request that is received by a router from a base station and forwarded to the server, where the IP query request includes identification information of the base station and a temporary IP address of the base station;
a first sending module, configured to send an IP query request response to the router, so that the router forwards the IP query request response to the base station, where the IP query request response carries a formal IP address allocated by the server to the base station according to the identification information of the base station;
a second receiving module, configured to receive a provisioning request that is received by the router from the base station and forwarded to the server, where the provisioning request carries the formal IP address; and
a second sending module, configured to send the provisioning response to the router, so that the router forwards the provisioning response, where the provisioning response carries a base station start parameter that is configured by the server for the base station.

With reference to the third aspect, in the first possible implementation manner of the third aspect, the IP query request response further includes: identification information of another base station, except the first base station, in the network segment in which the first base station is located, and a formal IP address corresponding to the another base station.

According to a fourth aspect, an embodiment provides a base station provisioning method, including:
sending, by a first base station, an Internet Protocol IP query request to a router, so that the router sends the IP query request to a server, where the IP query request includes identification information of the first base station and a temporary IP address of the first base station;
receiving, by the first base station, an IP query request response that is forwarded by the router to the first base station according to the temporary IP address, where the IP query request response carries a formal IP address that is allocated by the server to the first base station according to the identification information of the first base station;
sending, by the first base station, a provisioning request to the router, so that the router sends the provisioning request to the server, where the provisioning request carries the formal IP address; and
receiving, by the first base station, a provisioning response that is forwarded by the router to the first base station according to the formal IP address, where the provisioning response carries a base station start parameter that is configured by the server for the first base station.

With reference to the fourth aspect, in a first possible implementation manner of the fourth aspect, before the sending, by a first base station, an IP query request to a router, the method further includes:
receiving, by the first base station, a first Address Resolution Protocol ARP request sent by the router, where the first ARP request carries an IP address and a Media Access Control MAC address that are of the router;
determining, by the first base station according to the IP address of the router, a network segment in which the first base station is located; and
acquiring, by the first base station according to the network segment, the temporary IP address corresponding to the network segment.

With reference to the first possible implementation manner of the fourth aspect, in a second possible implementation manner of the fourth aspect, after the receiving, by the first base station, a first ARP request sent by the router, the method further includes:
sending, by the first base station according to the IP address of the router, a gratuitous ARP response to the router, where the gratuitous ARP response carries a MAC address of the first base station.

With reference to the fourth aspect, or the first or the second possible implementation manner of the fourth aspect, in a third possible implementation manner of the fourth aspect, the IP query request response further includes: identification information of another base station, except the first base station, in the network segment in which the first base station is located, and a formal IP address corresponding to the another base station.

With reference to the fourth aspect, and the first to the third possible implementation manners of the fourth aspect, in a fourth possible implementation manner of the fourth aspect, after the sending, by a first base station, an IP query request to a router, if the first base station does not receive the IP query request response within a set time, the method further includes:
sending, by the first base station, a gratuitous ARP request to the router, so that the router updates a correspondence between the temporary IP address and the MAC address that are of the first base station; and
resending, by the first base station, the IP query request to the router, so that the router sends the IP query request to the server.

With reference to the fourth aspect, and the first to the fourth possible implementation manners of the fourth aspect, in a fifth possible implementation manner of the fourth aspect, before the sending, by a first base station, an IP query request to a router, the method further includes:
sending, by the first base station, a second ARP request, where a destination address of the second ARP request is the temporary IP address; and
if the first base station receives an ARP response to the second ARP request, resending, by the first base station, the ARP request after a set first time, until the ARP response is not received by the first base station within a set second time.

According to a fifth aspect, an embodiment provides a base station provisioning method, including:
receiving, by a router, an Internet Protocol IP query request sent by a first base station, and sending the IP query request to a server, where the IP query request includes identification information of the first base station and a temporary IP address of the first base station;
forwarding, by the router according to the temporary IP, an IP query request response to the first base station, where the IP query request response carries a formal IP address that is allocated by the server to the first base station according to the identification information of the first base station;
receiving, by the router, a provisioning request sent by the first base station, and forwarding the provisioning request to the server, where the provisioning request carries the formal IP address; and
forwarding, by the router according to the formal IP address, a provisioning response to the first base station, where the provisioning response carries a base station start parameter configured by the server for the first base station.

With reference to the fifth aspect, in a first possible implementation manner of the fifth aspect, before the receiving, by a router, an IP query request sent by the first base station, the method further includes:
sending, by the router, a first Address Resolution Protocol ARP request to the first base station, where the first ARP request carries an IP address and a Media Access Control MAC address that are of the router, so that the first base station determines, according to the IP address of the router, a network segment in which the first base station is located, and acquire, according to the network segment, the temporary IP address corresponding to the network segment.

With reference to the fifth aspect, in a second possible implementation manner of the fifth aspect, after the sending, by the router, a first ARP request to the first base station, the method further includes:
receiving, by the router, a gratuitous ARP response that is sent by the first base station according to the IP address of the router, where the gratuitous ARP response carries a MAC address of the first base station.

With reference to the fifth aspect, or the first or the second possible implementation manner of the fifth aspect, in a third possible implementation manner of the fifth aspect, the IP query request response further includes: identification information of another base station, except the first base station, in the network segment in which the first base station is located, and a formal IP address corresponding to the another base station.

With reference to the fifth aspect, and the first to the third possible implementation manners of the fifth aspect, in a fourth possible implementation manner of the fifth aspect, after the receiving, by a router, an IP query request sent by the first base station, if the first base station does not receive the IP query request response within a set time, the method further includes:
receiving, by the router, a gratuitous ARP request sent by the first base station, and updating a correspondence between the temporary IP address and the MAC address; and
receiving, by the router, the IP query request resent by the first base station, and sending the IP query request to the server.

According to a sixth aspect, an embodiment provides a base station provisioning method, including:
receiving, by a server, an Internet Protocol IP query request that is received by a router from a first base station and forwarded to the server, where the IP query request includes identification information of the first base station and a temporary IP address of the first base station;
sending, by the server, an IP query request response to the router, so that the router forwards the IP query request response to the first base station, where the IP query request response carries a formal IP address allocated by the server to the first base station according to the identification information of the first base station;
receiving, by the server, a provisioning request that is received by the router from the first base station and forwarded to the server, where the provisioning request carries the formal IP address; and
sending, by the server, a provisioning response to the router, so that the router forwards the provisioning response, where the provisioning response carries a base station start parameter configured by the server for the first base station.

With reference to the sixth aspect, in a first possible implementation manner of the sixth aspect, the IP query request response further includes: identification information of another base station, except the first base station, in the network segment in which the first base station is located, and a formal IP address corresponding to the another base station.

According to a seventh aspect, an embodiment provides a base station, including:
a processor and a memory, where the memory stores an execution instruction; and when the base station runs, the processor communicates with the memory, and the processor executes the execution instruction to enable the base station to perform the method according to any method of the first aspect.

According to an eighth aspect, an embodiment provides a router, including: a processor and a memory, where the memory stores an execution instruction; and when the router runs, the processor communicates with the memory, and the processor executes the execution instruction to enable the base station to perform the method according to the method according to any method of the second aspect.

According to a ninth aspect, an embodiment provides a server, including: a processor and a memory, where the memory stores an execution instruction; and when the server runs, the processor communicates with the memory, and the processor executes the execution instruction to enable the base station to perform the method according to the method according to any method of the third aspect.

According to the base station provisioning method and the base station provisioning system that are provided in the present application, a base station may send an IP query request to a server by using a temporary IP address and a router, so as to request the server to allocate a formal IP address for the base station; after obtaining the formal IP address, the base station may request, by using the formal IP address and the router, the server to allocate a parameter related to the base station provisioning, which improves efficiency of the base station provisioning and reduces costs of the base station provisioning.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an embodiment of a base station provisioning method according to the present invention;
FIG. 2 is a flowchart of another embodiment of a base station provisioning method according to the present invention;
FIG. 3 is a flowchart of still another embodiment of a base station provisioning method according to the present invention;
FIG. 4 is a signaling diagram of an embodiment of a base station provisioning system according to the present invention;
FIG. 5 is a schematic structural diagram of an embodiment of a base station according to the present invention;
FIG. 6 is a schematic structural diagram of an embodiment of a router according to the present invention;
FIG. 7 is a schematic structural diagram of an embodiment of a server according to the present invention;
FIG. 8 is a schematic structural diagram of another embodiment of a base station according to the present invention;
FIG. 9 is a schematic structural diagram of another embodiment of a router according to the present invention; and
FIG. 10 is a schematic structural diagram of another embodiment of a server according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

Technologies described in this specification may be applied to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access) system, a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

A base station in the present application (for example, an access point) may be a base station (BTS, Base Transceiver Station) in GSM or the CDMA, or may be a base station (NodeB) in WCDMA, or may be an evolved NodeB (eNB or e-NodeB, evolved Node B) in LTE, which is not limited in this application.

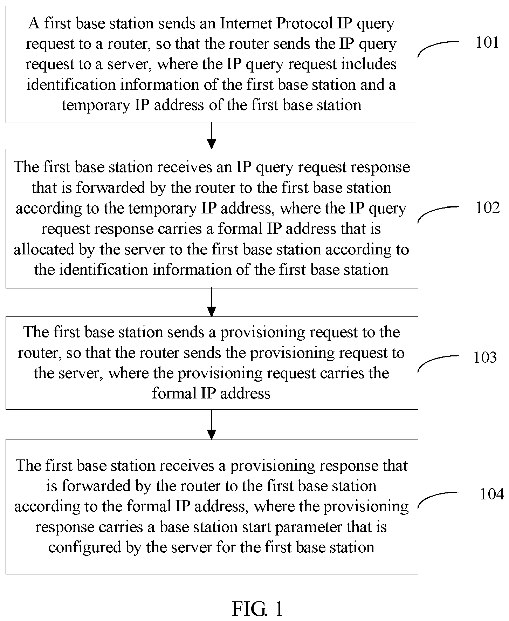

FIG. 1 is a flowchart of an embodiment of a base station provisioning method according to the present invention. As shown in FIG. 1, the method in this embodiment may include:
Step 101. A first base station sends an Internet Protocol IP query request to a router, so that the router sends the IP query request to a server, where the IP query request includes identification information of the first base station and a temporary IP address of the first base station.
Step 102. The first base station receives an IP query request response that is forwarded by the router to the first base station according to the temporary IP address, where the IP query request response carries a formal IP address that is allocated by the server to the first base station according to the identification information of the first base station.
Step 103. The first base station sends a provisioning request to the router, so that the router sends the provisioning request to the server, where the provisioning request carries the formal IP address.
Step 104. The first base station receives a provisioning response that is forwarded by the router to the first base station according to the formal IP, where the provisioning response carries a base station start parameter that is configured by the server for the first base station.

In this embodiment of the present invention, one router may be connected to multiple base stations, and one server may be connected to multiple routers. Information sent by a base station to a server needs to be first sent to a router and then be forwarded by the router to the server. Similarly, information sent by the server to the base station needs to be first sent to the router, and be forwarded by the router to the base station.

The first base station involved in this embodiment of the present invention may be any base station in a network. Identification information of the base station may be used to uniquely identify the base station in the network, for example, the identification information may be an electronic serial number (Electronic Serial Number, ESN) of the base station, or other identification information, which is not limited in the present invention.

One temporary IP address or multiple IP addresses may be set in one network segment (including one router, and multiple base stations connected to the router). Generally, one temporary IP address may be set in one network segment to reduce IP address resources. The temporary IP address may be stored in a device with a storage function, such as a USB flash drive. By using a network interface, a serial interface, a fiber interface on a board of a base station, or another communications interface, the base station may be connected to and communicate with a device that has a storage function, and read the temporary IP address that is in the network segment and stored on the device that has the storage function. It should be noted that the present invention sets no specific limit on how to store the temporary IP address and how a base station acquires the temporary IP address.

After receiving the IP query request sent by the first base station, the server may allocate, according to the identification information of the first base station, a corresponding formal IP address to the first base station, and send the formal IP address. The server stores information such as formal IP addresses, subnet masks, and next-hop routes that are of all base stations in all networks. After acquiring the formal IP address, the first base station may use the formal IP address to send the provisioning request to the server. After receiving the provisioning request, the server sends a configuration parameter needed for provisioning the base station (different parameters need to be configured for provisioning of base stations of different types, for example, the parameters may include a base station name, a sector number, a location area, a routing area, and a cell type, and details are not described again in the present invention) to the base station, and the first base station may perform base station provisioning according to the parameter sent by the server.

Further, before sending the IP query request to the router, the first base station may further discover the router, and a specific process is: the first base station receives a first Address Resolution Protocol ARP request, where the first ARP request carries an IP address and a Media Access Control MAC address that are of the router. The first base station determines, according to the IP address of the router, a network segment in which the first base station is located. The first base station may acquire, according to the network segment, a temporary IP address corresponding to the network segment. Different temporary IP addresses may be planned in different network segments; therefore, according to the foregoing steps, it may be ensured that the base station acquires a correct temporary IP address.

Further, after the first base station receives the first ARP request sent by the router, the router may further discover the base station, and a specific process is: the first base station may further send a gratuitous ARP response to the router according to the IP address of the router, where the gratuitous ARP response carries a MAC address of the first base station.

According to the foregoing steps, the base station can learn the IP address and MAC address that are of the router, and the router can also learn the temporary IP address and the MAC address that are of the base station; therefore, normal communication between the router and the base station is ensured.

Further, when the router is attacked, an ARP entry error may occur, or after a network device changes, an ARP entry of the router may not be updated in time. In either case, the server may send an allocated formal IP address to another second base station, except the first base station, in the network. For the purpose of resolving this problem, the IP query request response may further include: identification information of another second base station, except the first base station, in the network segment in which the first base station is located, and a formal IP address corresponding to the another second base station. After the first base station sends the IP query request to the router, if the first base station does not receive the IP query request response within a set time, the first base station sends a gratuitous ARP request to the router, so that the router updates a correspondence between the temporary IP address and the MAC address that are of the first base station. The first base station resends the IP query request to the router, so that the router sends the IP query request to the server.

If multiple first base stations are involved, that is, in an implementation scenario in which multiple base stations are being simultaneously provisioned, a case of "IP preemption" may occur, and base station provisioning is affected. In this embodiment, if the first base station and the second base station are being simultaneously provisioned, and an ARP entry in the router is tampered, for example, the entry is tampered from "the temporary IP address is corresponding to the MAC address of the first base station" to "the temporary IP address is corresponding to the MAC address of the second base station", the router forwards the IP query request response received from the server to the second base station. In this case, automatic provisioning may be implemented after the second base station receives the IP query request (the IP query request carries formal IP addresses of all base stations that are not provisioned in the network segment); however, the first base station cannot receive the IP query request response. At this time, the first base station may send the gratuitous ARP request, and a source IP address and a destination IP address that are carried in the ARP request are temporary IP addresses of the first base station, where a source MAC address is the MAC address of the first base station, and a destination MAC address is a broadcast address, so as to instruct the router to update the ARP entry. After updating the ARP entry, the router may forward the IP query request response to the first base station.

Optionally, before sending the IP query request to the router, the first base station may first determine whether the temporary IP address is being occupied by another base station. Specifically, the first base station may send a second ARP request, where a destination address of the second ARP request is the temporary IP address. If the first base station receives the ARP response to the ARP request, it indicates that the temporary IP address is being occupied by the another base station. The first base station needs to wait until the another base station that occupies the temporary IP address releases the temporary IP address, and then the first base station may occupy the temporary IP address. If the first base station resends the ARP request after a set first time, until the ARP response is not received by the first base station within a set second time, which indicates that at this time, no other base station is occupying the temporary IP address, and then the first base station may occupy the temporary IP address.

According to the base station provisioning method provided in the present application, a base station may send an IP query request to a server by using a temporary IP address and a router, so as to request the server to allocate a formal IP address for the base station; after obtaining the formal IP address, the base station may request, by using the formal IP address and the router, the server to allocate a parameter related to the base station provisioning, which improves efficiency of the base station provisioning and reduces costs of the base station provisioning.

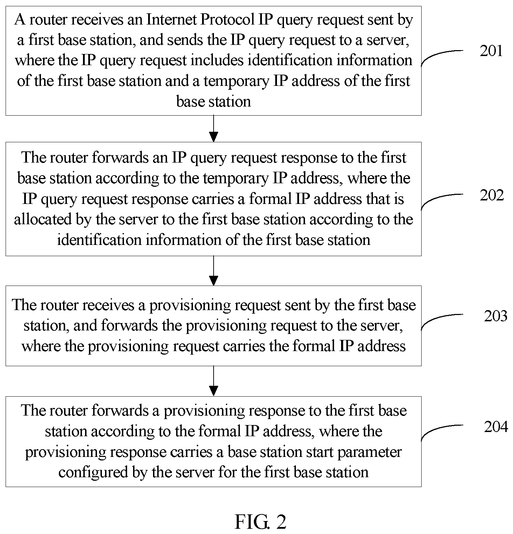

FIG. 2 is a flowchart of another embodiment of a base station provisioning method according to the present invention. As shown in FIG. 2, the method in this embodiment may include:
Step 201. A router receives an Internet Protocol IP query request sent by a first base station, and sends the IP query request to a server, where the IP query request includes identification information of the first base station and a temporary IP address of the first base station.
Step 202. The router forwards an IP query request response to the first base station according to the temporary IP address, where the IP query request response carries a formal IP address that is allocated by the server to the first base station according to the identification information of the first base station.
Step 203. The router receives a provisioning request sent by the first base station, and forwards the provisioning request to the server, where the provisioning request carries the formal IP address.
Step 204. The router forwards a provisioning response to the first base station according to the formal IP address, where the provisioning response carries a base station start parameter configured by the server for the first base station.

In this embodiment of the present invention, one router may be connected to multiple base stations, and one server may be connected to multiple routers. Information sent by a base station to a server needs to be first sent to a router and then be forwarded by the router to the server. Similarly, information sent by the server to the base station needs to be first sent to the router, and be forwarded by the router to the base station.

The first base station involved in this embodiment of the present invention may be any base station in a network. Identification information of the base station may be used to uniquely identify the base station in the network, for example, the identification information may be an electronic serial number (Electronic Serial Number, ESN) of the base station, or other identification information, which is not limited in the present invention.

One temporary IP address or multiple IP addresses may be set in one network segment (including one router, and multiple base stations connected to the router). Generally, one temporary IP address may be set in one network segment to reduce an IP address resource. The temporary IP address may be stored in a device with a storage function, such as a USB flash drive. By using a network interface, a serial interface, a fiber interface on a board of a base station, or another communications interface, the base station may be connected to and perform communication with a device that has a storage function, and read the temporary IP address that is in the network segment and stored on the device that has the storage function. It should be noted that the present invention sets no specific limit on how to store the temporary IP address and how a base station acquires the temporary IP address.

After receiving the IP query request sent by the first base station, the server may allocate, according to the identification information of the first base station, a corresponding formal IP address to the first base station, and send the formal IP address. The server stores information such as formal IP addresses, subnet masks, and next-hop routes that are of all base stations in all networks. After acquiring the formal IP address, the first base station may use the formal IP address to send the provisioning request to the server. After receiving the provisioning request, the server sends a configuration parameter needed for provisioning the base station (different parameters need to be configured for provisioning of base stations of different types, for example, the parameters may include a base station name, a sector number, a location area, a routing area, and a cell type, and details are not described again in the present invention) to the base station, and the first base station may perform base station provisioning according to the parameter sent by the server.

Further, before the router receives the IP query request sent by the first base station, the first base station may further discover the router, and a specific process is: the router sends a first Address Resolution Protocol ARP request to the first base station, where the first ARP request carries an IP address and a Media Access Control MAC address that are of the router, so that the router determines, according to the IP address of the router, a network segment in which the base station is located, and acquire, according to the network segment, the temporary IP address corresponding to the network segment.

Further, after the router sends the first ARP request to the first base station, the router may further discover the base station, and a specific process is: the router receives a gratuitous ARP response that is sent by the first base station according to the IP address of the router, where the gratuitous ARP response carries a MAC address of the first base station.

According to the foregoing steps, the base station can learn the IP address and MAC address that are of the router, and the router can also learn the temporary IP address and the MAC address that are of the base station; therefore, normal communication between the router and the base station is ensured.

Further, when the router is attacked, an ARP entry error may occur, or after a network device changes, an ARP entry of the router may not be updated in time. In either case, the server may send an allocated formal IP address to another second base station, except the first base station, in the network. For the purpose of resolving this problem, the IP query request response may further include: identification information of another second base station, except the first base station, in the network segment in which the first base station is located, and a formal IP address corresponding to the another second base station. After the first base station sends the IP query request to the router, if the first base station does not receive the IP query request response within a set time, the first base station sends a gratuitous ARP request to the router, so that the router updates a correspondence between the temporary IP address and the MAC address that are of the first base station. The first base station resends the IP query request to the router, so that the router sends the IP query request to the server.

If multiple first base stations are involved, that is, in an implementation scenario in which multiple base stations are being simultaneously provisioned, a case of "IP preemption" may occur, and base station provisioning is affected. In this embodiment, if the first base station and the second base station are being simultaneously provisioned, and an ARP entry in the router is tampered, for example, the entry is tampered from "the temporary IP address is corresponding to the MAC address of the first base station" to "the temporary IP address is corresponding to the MAC address of the second base station", the router forwards the IP query request response received from the server to the second base station. In this case, automatic provisioning may be implemented after the second base station receives the IP query request (the IP query request carries formal IP addresses of all base stations that are not provisioned in the network segment); however, the first base station cannot receive the IP query request response. At this time, the first base station may send the gratuitous ARP request, and a source IP address and a destination IP address that are carried in the ARP request are temporary IP addresses of the first base station, where a source MAC address is the MAC address of the first base station, and a destination MAC address is a broadcast address, so as to instruct the router to update the ARP entry. After updating the ARP entry, the router may forward the IP query request response to the first base station.

According to the base station provisioning method provided in the present application, a base station may send an IP query request to a server by using a temporary IP address and a router, so as to request the server to allocate a formal IP address for the base station; after obtaining the formal IP address, the base station may request, by using the formal IP address and the router, the server to allocate a parameter related to the base station provisioning, which improves efficiency of the base station provisioning and reduces costs of the base station provisioning.

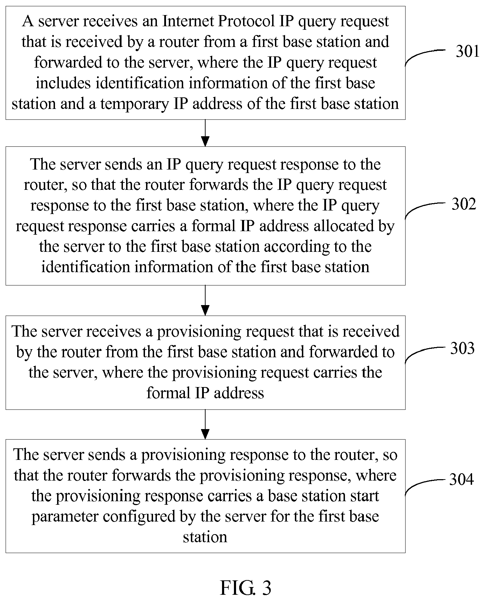

FIG. 3 is a flowchart of still another embodiment of a base station provisioning method according to the present invention. As shown in FIG. 3, the method in this embodiment may include:
Step 301. A server receives an Internet Protocol IP query request that is received by a router from a first base station and forwarded to the server, where the IP query request includes identification information of the first base station and a temporary IP address of the first base station.
Step 302. The server sends an IP query request response to the router, so that the router forwards the IP query request response to the first base station, where the IP query request response carries a formal IP address allocated by the server to the first base station according to the identification information of the first base station.
Step 303. The server receives a provisioning request that is received by the router from the first base station and forwarded to the server, where the provisioning request carries the formal IP address.
Step 304. The server sends a provisioning response to the router, so that the router forwards the provisioning response, where the provisioning response carries a base station start parameter configured by the server for the first base station.

Further, the IP query request response further includes: identification information of another second base station, except the first base station, in the network segment in which the first base station is located, and a formal IP address corresponding to the another second base station.

In this embodiment of the present invention, one router may be connected to multiple base stations, and one server may be connected to multiple routers. Information sent by a base station to a server needs to be first sent to a router and then be forwarded by the router to the server. Similarly, information sent by the server to the base station needs to be first sent to the router, and be forwarded by the router to the base station.

The first base station involved in this embodiment of the present invention may be any base station in a network. Identification information of the base station may be used to uniquely identify the base station in the network, for example, the identification information may be an electronic serial number (Electronic Serial Number, ESN) of the base station, or other identification information, which is not limited in the present invention.

One temporary IP address or multiple IP addresses may be set in one network segment (including one router, and multiple base stations connected to the router). Generally, one temporary IP address may be set in one network segment to reduce an IP address resource. The temporary IP address may be stored in a device with a storage function, such as a USB flash drive. By using a network interface, a serial interface, a fiber interface on a board of a base station, or another communications interface, the base station may be connected to and perform communication with a device that has a storage function, and read the temporary IP address that is in the network segment and stored on the device that has the storage function. It should be noted that the present invention sets no specific limit on how to store the temporary IP address and how a base station acquires the temporary IP address.

After receiving the IP query request sent by the first base station, the server may allocate, according to the identification information of the first base station, a corresponding formal IP address to the first base station, and send the formal IP address. The server stores information such as formal IP addresses, subnet masks, and next-hop routes that are of all base stations in all networks. After acquiring the formal IP address, the first base station may use the formal IP address to send the provisioning request to the server. After receiving the provisioning request, the server sends a configuration parameter needed for provisioning the base station (different parameters need to be configured for provisioning of base stations of different types, for example, the parameters may include a base station name, a sector number, a location area, a routing area, and a cell type, and details are not described again in the present invention) to the base station, and the first base station may perform base station provisioning according to the parameter sent by the server.

According to the base station provisioning method provided in the present application, a base station may send an IP query request to a server by using a temporary IP address and a router, so as to request the server to allocate a formal IP address for the base station; after obtaining the formal IP address, the base station may request, by using the formal IP address and the router, the server to allocate a parameter related to the base station provisioning, which improves efficiency of the base station provisioning and reduces a costs of the base station provisioning.

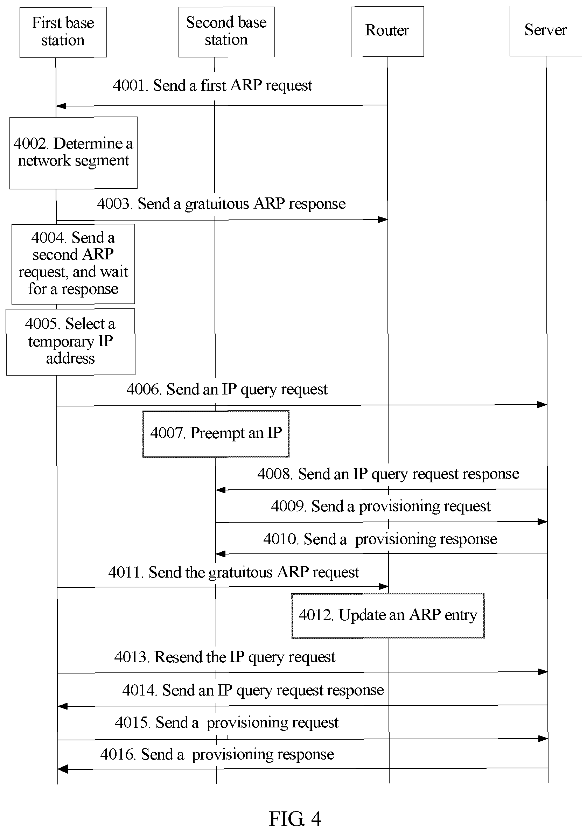

FIG. 4 is a signaling diagram of an embodiment of a base station provisioning system according to the present invention. As shown in FIG. 4, the system includes the following steps:
Step 4001. A router sends a first ARP request to a first base station.

The router sends an ARP request, and then the first base station may learn, according to the ARP request, an IP address and a MAC address that are of the router.

Step 4002. The first base station determines a network segment.

The first base station may learn, according to the IP address of the router, a network segment in which the first base station is located.

Step 4003. The first base station sends a gratuitous ARP response to the router.

This step is used by the base station to register a MAC address with the router. By performing this step, the router may learn the MAC address of the base station.

Step 4004. The first base station sends a second ARP request, and waits for a response.

This step is used by the first base station to determine, before occupying a temporary IP address, whether the temporary IP address is being occupied by another base station. If a response to the second ARP request is received, it indicates that the temporary IP address is being occupied by the another base station. The first base station needs to wait until the base station that occupies the temporary IP address releases the temporary IP address, and then the first base station may occupy the temporary IP address.

Step 4005. The first base station selects the temporary IP address, that is, the first base station occupies the temporary IP address.

Step 4006. The first base station sends an IP query request to a server.

This step is used by the first base station to query, from the server, a formal IP address of the first base station, where the IP query request carries the temporary IP address.

Step 4007. The second base station preempts an IP.

If the second base station is being provisioned, and the IP preemption occurs in the second base station, an ARP entry of the router is tampered, for example, the ARP entry is tampered from "the temporary IP address is corresponding to the MAC address of the first base station" to "the temporary IP address is corresponding to the MAC address of the second base station".

Step 4008. The server sends an IP query response.

After receiving the IP query request, the server sends the IP query response to the router, and because the ARP entry of the router is tampered, the router sends the IP query response to the second base station, and the first base station cannot receive the IP query response. Because the IP query response carries formal IP addresses of all base stations that are not provisioned, all second base stations learn a formal IP address of the second base station.

Step 4009. The second base station sends a provisioning request, where the provisioning request carries the formal IP address of the second base station.

Step 4010. The server sends a provisioning response to the second base station to implement provisioning of the second base station.

Step 4011. The first base station sends the gratuitous ARP request to the router.

This step is used by the first base station to instruct the router to update the ARP entry of the first base station.

Step 4012. The router updates the ARP entry.

Step 4013. The first base station resends the IP query request to the server.

Step 4014. The server sends an IP query request response to the first base station.

Because the ARP entry of the router is updated, the first base station receives the IP query request response, and learns the formal IP address of the first base station according to the IP query request response.

Step 4015. The first base station sends a provisioning request to the server, where the provisioning request carries the formal IP address of the first base station.

Step 4016. The server sends a provisioning response to the first base station, where the provisioning response carries a configuration parameter needed for provisioning the first base station, so as to implement the provisioning of the first base station.

The foregoing steps 4001 to 4003 are corresponding to a process in which the first base station and the router discover each other. The first base station acquires the temporary IP address in step 4005. Optionally, the first base station determines, in step 4004, whether the temporary IP address is being occupied by the another base station. Step 4006 and step 4014 are a process in which the first base station acquires the formal IP address. Optionally, if the temporary IP address is preempted by the second base station, as shown in step 4007, the second base station may be provisioned by performing steps 4008 to 4010; however, the first base station cannot acquire the formal IP address, and then the first base station needs to re-acquire the formal IP address by performing steps 4011 to 4013, steps 4015 to 4016 need to be performed to implement provisioning of the base station.

According to the base station provisioning method provided in the present application, a base station may send an IP query request to a server by using a temporary IP address and a router, so as to request the server to allocate a formal IP address for the base station; after obtaining the formal IP address, the base station may request, by using the formal IP address and the router, the server to allocate a parameter related to the base station provisioning, which improves efficiency of the base station provisioning and reduces costs of the base station provisioning.

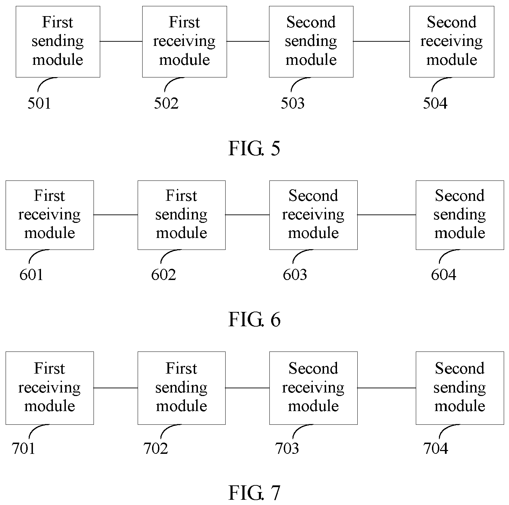

FIG. 5 is a schematic structural diagram of an embodiment of a base station according to the present invention. The base station includes:
a first sending module 501, configured to send an Internet Protocol IP query request to a router, so that the router sends the IP query request to a server, where the IP query request includes identification information of the base station and a temporary IP address of the base station;
a first receiving module 502, configured to receive an IP query request response that is forwarded by the router to the base station according to the temporary IP address, where the IP query request response carries a formal IP address that is allocated by the server to the base station according to the identification information of the base station;
a second sending module 503, configured to send a provisioning request to the router, so that the router sends the provisioning request to the server, where the provisioning request carries the formal IP address; and
a second receiving module 504, configured to receive a provisioning response that is forwarded by the router to the base station according to the formal IP, where the provisioning response carries a base station start parameter that is configured by the server for the base station.

Further, the first receiving module is further configured to: before the first sending module sends the IP query request to the router, receive a first Address Resolution Protocol ARP request sent by the router, where the first ARP request carries an IP address and a Media Access Control MAC address that are of the router; determine, according to the IP address of the router, a network segment in which the base station is located; and acquire, according to the network segment, the temporary IP address corresponding to the network segment.

Further, the first sending module is further configured to: after the first receiving module receives the first ARP request sent by the router, send a gratuitous ARP response to the router according to the IP address of the router, where the gratuitous ARP response carries a MAC address of the base station.

Further, the IP query request response further includes: identification information of another base station, except the base station, in the network segment in which the base station is located, and a formal IP address corresponding to the another base station.

Further, after the first sending module sends the IP query request to the router, if the first receiving module does not receive the IP query request response within a set time, the first sending module is further configured to: send the gratuitous ARP request to the router, so that the router updates a correspondence between the temporary IP address and the MAC address that are of the base station; and resend the IP query request to the router, so that the router sends the IP query request to the server.

Further, the first sending module is further configured to: send a second ARP request before sending the IP query request to the router, where a destination address of the second ARP request is the temporary IP address; and if an ARP response to the second ARP request is received, resend the ARP request after a set first time, until the ARP response is not received by the first sending module within a set second time.

The apparatus in this embodiment may be used to implement the technical solution in the method embodiment shown in FIG. 1, and an implementation principle and a technical effect of the apparatus are similar to those of the technical solution and are not described herein again.

FIG. 6 is a schematic structural diagram of an embodiment of a router according to the present invention, and the router includes:
a first receiving module 601, configured to: receive an Internet Protocol IP query request sent by a base station, and send the IP query request to a server, where the IP query request includes identification information of the base station and a temporary IP address of the base station;
a first sending module 602, configured to forward an IP query request response to the base station according to the temporary IP address, where the IP query request response carries a formal IP address that is allocated by the server to the base station according to the identification information of the base station;
a second receiving module 603, configured to: receive a provisioning request sent by the base station, and forward the provisioning request to the server, where the provisioning request carries the formal IP address; and
a second sending module 604, configured to forward a provisioning response to the base station according to the formal IP address, where the provisioning response carries a base station start parameter that is configured by the server for the base station.

Further, the first sending module is further configured to: before the first receiving module receives the IP query request sent by the base station, send a first Address Resolution Protocol ARP request to the base station, where the first ARP request carries an IP address and a Media Access Control MAC address that are of the router, so that the router determines, according to the IP address of the router, a network segment in which the base station is located, and acquire, according to the network segment, the temporary IP address corresponding to the network segment.

Further, the first receiving module is further configured to: after the first sending module sends the first ARP request to the base station, receive a gratuitous ARP response sent by the base station according to the IP address of the router, where the gratuitous ARP response carries a MAC address of the base station.

Further, the IP query request response further includes: identification information of another base station, except the base station, in the network segment in which the base station is located, and a formal IP address corresponding to the another base station.

Further, after the first receiving module receives the IP query request sent by the base station, if the base station does not receive the IP query request response sent by the base station within a set time, the first receiving module is further configured to: receive the gratuitous ARP request sent by the base station; update a correspondence between the temporary IP address and the MAC address; receive the IP query request resent by the base station; and send the IP query request to the server.

The apparatus in this embodiment may be used to implement the technical solution in the method embodiment shown in FIG. 2, and an implementation principle and a technical effect of the apparatus are similar to those of the technical solution and are not described herein again.

FIG. 7 is a schematic structural diagram of an embodiment of a server according to the present invention, and the server includes:
a first receiving module 701, configured to receive an Internet Protocol IP query request that is received by a router from a base station and forwarded to the server, where the IP query request includes identification information of the base station and a temporary IP address of the base station;
a first sending module 702, configured to send an IP query request response to the router, so that the router forwards the IP query request response to the base station, where the IP query request response carries a formal IP address allocated by the server to the base station according to the identification information of the base station;
a second receiving module 703, configured to receive a provisioning request that is received by the router from the base station and forwarded to the server, where the provisioning request carries the formal IP address; and
a second sending module 704, configured to send the provisioning response to the router, so that the router forwards the provisioning response, where the provisioning response carries a base station start parameter that is configured by the server for the base station.

Further, the IP query request response further includes: identification information of another second base station, except the first base station, in the network segment in which the first base station is located, and a formal IP address corresponding to the another second base station.

The apparatus in this embodiment may be used to implement the technical solution in the method embodiment shown in FIG. 3, and an implementation principle and a technical effect of the apparatus are similar to those of the technical solution and are not described herein again.

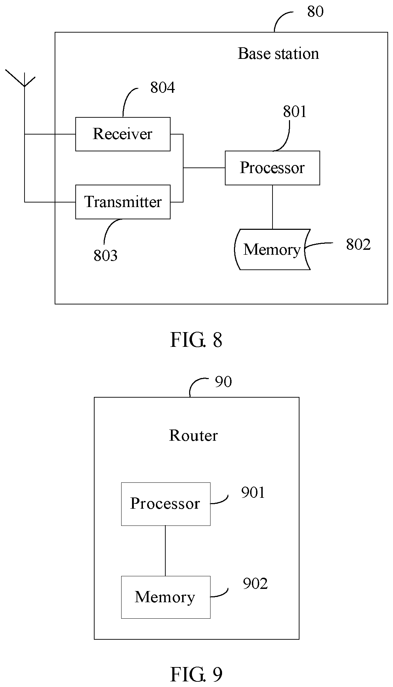

FIG. 8 is a schematic structural diagram of another embodiment of a base station according to the present invention. As shown in FIG. 8, the base station 80 provided in this embodiment includes a processor 801 and a memory 802. The base station 80 may further include a transmitter 803 and a receiver 804. The transmitter 803 and the receiver 804 may be connected to the processor 801. The transmitter 803 is configured to send data or information, the receiver 804 is configured to receive the data and the information, and the memory 802 stores an execution instruction. When the base station 80 runs, the processor 801 communicates with the memory 802, and the processor 801 invokes the execution instruction in the memory 802 to perform the following operations:
sending, by a first base station, an Internet Protocol IP query request to a router, so that the router sends the IP query request to a server, where the IP query request includes identification information of the first base station and a temporary IP address of the first base station;
receiving, by the first base station, an IP query request response that is forwarded by the router to the first base station according to the temporary IP address, where the IP query request response carries a formal IP address that is allocated by the server to the first base station according to the identification information of the first base station;
sending, by the first base station, a provisioning request to the router, so that the router sends the provisioning request to the server, where the provisioning request carries the formal IP address; and
receiving, by the first base station, a provisioning response that is forwarded by the router to the first base station according to the formal IP address, where the provisioning response carries a base station start parameter that is configured by the server for the first base station.

Further, before the sending, by a first base station, an IP query request to a router, the operations further include:
receiving, by the first base station, a first Address Resolution Protocol ARP request sent by the router, where the first ARP request carries an IP address and a Media Access Control MAC address that are of the router;
determining, by the first base station according to the IP address of the router, a network segment in which the first base station is located; and
acquiring, by the first base station according to the network segment, a temporary IP address corresponding to the network segment.

Further, after the receiving, by the first base station, a first ARP request sent by the router, the operations further include:
sending, by the first base station according to the IP address of the router, a gratuitous ARP response to the router, where the gratuitous ARP response carries a MAC address of the first base station.

Further, the IP query request response further includes: identification information of another second base station, except the first base station, in the network segment in which the first base station is located, and a formal IP address corresponding to the another second base station.

Further, after the sending, by a first base station, an IP query request to a router, if the first base station does not receive the IP query request response within a set time, the method further includes:
sending, by the first base station, a gratuitous ARP request to the router, so that the router updates a correspondence between the temporary IP address and the MAC address that are of the first base station; and
resending, by the first base station, the IP query request to the router, so that the router sends the IP query request to the server.

Further, before the sending, by a first base station, an IP query request to a router, the operations further include:
sending, by the first base station, a second ARP request, where a destination address of the second ARP request is the temporary IP address; and
if the first base station receives an ARP response to the second ARP request, resending, by the first base station, the ARP request after a set first time, until the ARP response is not received by the first base station within a set second time.

The base station in this embodiment may be used to perform the technical solution of the base station provisioning method provided in any embodiment of the present invention, and an implementation principle and a technical effect of the apparatus are similar to those of the technical solution and are not described herein again.

FIG. 9 is a schematic structural diagram of another embodiment of a router according to the present invention. As shown in FIG. 9, a router 90 provided in this embodiment includes a processor 901 and a memory 902. When the router 90 runs, the processor 901 communicates with the memory 902, and the processor 901 invokes an execution instruction in the memory 902 to perform the following operations:
receiving, by the router, an Internet Protocol IP query request sent by a first base station, and sending the IP query request to a server, where the IP query request includes identification information of the first base station and a temporary IP address of the first base station;
forwarding, by the router according to the temporary IP address, an IP query request response to the first base station, where the IP query request response carries a formal IP address that is allocated by the server to the first base station according to the identification information of the first base station;
receiving, by the router, a provisioning request sent by the first base station, and forwarding the provisioning request to the server, where the provisioning request carries the formal IP address; and
forwarding, by the router according to the formal IP address, a provisioning response to the first base station, where the provisioning response carries a base station start parameter configured by the server for the first base station.

Further, before the receiving, by the router, an IP query request sent by a first base station, the operations further include:
sending, by the router, a first Address Resolution Protocol ARP request to the first base station, where the first ARP request carries an IP address and a Media Access Control MAC address that are of the router, so that the first base station determines, according to the IP address of the router, a network segment in which the first base station is located, and acquire, according to the network segment, the temporary IP address corresponding to the network segment.

Further, after the sending, by the router, a first ARP request to the first base station, the operations further include:
receiving, by the router, a gratuitous ARP response that is sent by the first base station according to the IP address of the router, where the gratuitous ARP response carries a MAC address of the first base station.

Further, the IP query request response further includes: identification information of another second base station, except the first base station, in the network segment in which the first base station is located, and a formal IP address corresponding to the another second base station.

Further, after the receiving, by the router, an IP query request sent by a first base station, if the first base station does not receive the IP query request response within a set time, the method further includes:
receiving, by the router, a gratuitous ARP request sent by the first base station, and updating a correspondence between the temporary IP address and the MAC address; and
receiving, by the router, the IP query request resent by the first base station, and sending the IP query request to the server.

The router in this embodiment may be used to perform the technical solution of the base station provisioning method provided in any embodiment of the present invention, and an implementation principle and a technical effect of the apparatus are similar to those of the technical solution and are not described herein again.

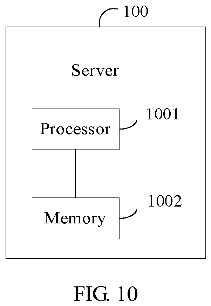

FIG. 10 is a schematic structural diagram of another embodiment of a server according to the present invention. As shown in FIG. 10, a server 100 provided in this embodiment includes a processor 1001 and a memory 1002. When the server 100 runs, the processor 1001 communicates with the memory 1002, and the processor 1001 invokes an execution instruction in the memory 1002 to perform the following operations:
receiving, by a server, an Internet Protocol IP query request that is received by a router from a first base station and forwarded to the server, where the IP query request includes identification information of the first base station and a temporary IP address of the first base station;
sending, by the server, an IP query request response to the router, so that the router forwards the IP query request response to the first base station, where the IP query request response carries a formal IP address allocated by the server to the first base station according to the identification information of the first base station;
receiving, by the server, a provisioning request that is received by the router from the first base station and forwarded to the server, where the provisioning request carries the formal IP address; and
sending, by the server, a provisioning response to the router, so that the router forwards the provisioning response, where the provisioning response carries a base station start parameter configured by the server for the first base station.

Further, the IP query request response further includes: identification information of another second base station, except the first base station, in the network segment in which the first base station is located, and a formal IP address corresponding to the another second base station.

The server in this embodiment may be used to perform the technical solution of the base station provisioning method provided in any embodiment of the present invention, and an implementation principle and a technical effect of the apparatus are similar to those of the technical solution and are not described herein again.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A base station, comprising:
a first sending module (501), configured to send an Internet Protocol, IP, query request to a router so that the router is able to send the IP query request to a server, for allocating a formal IP address for the base station, wherein the IP query request comprises identification information of the base station and a temporary IP address of the base station;
a first receiving module (502), configured to receive an IP query request response that is forwarded by the router to the base station according to the temporary IP address, wherein the IP query request response carries the formal IP address that is allocated by the server to the base station according to the identification information of the base station; **characterized by** comprising
a second sending module (503), configured to send a provisioning request to the router so that the router is able to send the provisioning request to the server, wherein the provisioning request carries the formal IP address; and
a second receiving module (504), configured to receive a provisioning response that is forwarded by the router to the base station according to the formal IP address, wherein the provisioning response carries a base station start parameter that is configured by the server for the base station, wherein the first receiving module (502) is further configured to: before the first sending module (501) sends the IP query request to the router, receive a first Address Resolution Protocol, ARP, request sent by the router, wherein the first ARP request carries an IP address and a Media Access Control, MAC, address that are of the router; determine, according to the IP address of the router, a network segment in which the base station is located; and select according to the network segment, the temporary IP address corresponding to the network segment.

2. The base station according to claim 1, wherein the first sending module (501) is further configured to: after the first receiving module (502) receives the first ARP request sent by the router, send a gratuitous ARP response to the router according to the IP address of the router, wherein the gratuitous ARP response carries a MAC address of the base station.

3. The base station according to any one of claims 1 to 2, wherein the IP query request response further comprises: identification information of another base station, except the base station, in the network segment in which the base station is located, and a formal IP address corresponding to the another base station.

4. The base station according to any one of claims 1 to 3, wherein the first sending module (501) is further configured to: send a second ARP request before sending the IP query request to the router, wherein a destination address of the second ARP request is the temporary IP address; and if an ARP response to the second ARP request is received, resend the ARP request after a set first time, until the ARP response is not received by the first sending module within a set second time.

5. A router, comprising:
a first receiving module (601), configured to: receive an Internet Protocol, IP, query request sent by a base station for allocating a formal IP address for the base station, and send the IP query request to a server, wherein the IP query request comprises identification information of the base station and a temporary IP address of the base station;
a first sending module (602), configured to forward an IP query request response to the base station according to the temporary IP address, wherein the IP query request response carries the formal IP address that is allocated by the server to the base station according to the identification information of the base station;
**characterized by** comprising
a second receiving module (603), configured to: receive a provisioning request sent by the base station, and forward the start request to the server, wherein the provisioning request carries the formal IP address; and
a second sending module (604), configured to forward a provisioning response to the base station according to the formal IP address, wherein the provisioning response carries a base station start parameter that is configured by the server for the base station, wherein the first sending module (602) is further configured to: before the first receiving module (601) receives the IP query request sent by the base station, send a first Address Resolution Protocol, ARP, request to the base station, wherein the first ARP request carries an IP address and a Media Access Control, MAC, address that are of the router, so that the base station determines, according to the IP address of the router, a network segment in which the base station is located, and select according to the network segment, the temporary IP address corresponding to the network segment.

6. A base station provisioning method, comprising:
sending (101), by a first base station, an Internet Protocol, IP, query request to a router so that the router is able to send the IP query request to a server, for allocating a formal IP address for the base station, wherein the IP query request comprises identification information of the first base station and a temporary IP address of the first base station;
receiving (102), by the first base station, an IP query request response that is forwarded by the router to the first base station according to the temporary IP address, wherein the IP query request response carries the formal IP address that is allocated by the server to the first base station according to the identification information of the first base station;
**characterized by**
sending (103), by the first base station, a provisioning request to the router, so that the router is able to send the provisioning request to the server, wherein the provisioning request carries the formal IP address; and
receiving (104), by the first base station, a provisioning response that is forwarded by the router to the first base station according to the formal IP address, wherein the provisioning response carries a base station start parameter that is configured by the server for the first base station, wherein before the sending, by a first base station, an IP query request to a router, the method further comprises:
receiving, by the first base station, a first Address Resolution Protocol, ARP, request sent by the router, wherein the first ARP request carries an IP address and a Media Access Control, MAC, address that are of the router;
determining, by the first base station according to the IP address of the router, a network segment in which the first base station is located; and selecting by the first base station according to the network segment, the temporary IP address corresponding to the network segment.

7. The method according to claim 6, wherein after the receiving, by the first base station, a first ARP request sent by the router, the method further comprises:
sending, by the first base station according to the IP address of the router, a gratuitous ARP response to the router, wherein the gratuitous ARP response carries a MAC address of the first base station.

8. The method according to any one of claims 6 to 7, wherein the IP query request response further comprises: identification information of another base station, except the first base station, in the network segment in which the first base station is located, and a formal IP address corresponding to the another base station.

9. A base station provisioning method, comprising:
receiving (201), by a router, an Internet Protocol, IP, query request sent by a first base station for allocating a formal IP address for the base station, and sending the IP query request to a server, wherein the IP query request comprises identification information of the first base station and a temporary IP address of the first base station;
forwarding (202), by the router according to the temporary IP address, an IP query request response to the first base station, wherein the IP query request response carries the formal IP address that is allocated by the server to the first base station according to the identification information of the first base station;
**characterized by** comprising
receiving (203), by the router, a provisioning request sent by the first base station, and forwarding the provisioning request to the server, wherein the start request carries the formal IP address; and
forwarding (204), by the router according to the formal IP address, a provisioning response to the first base station, wherein the provisioning response carries a base station start parameter configured by the server for the first base station, wherein before the receiving, by a router, an IP query request sent by a first base station, the method further comprises:
sending, by the router, a first Address Resolution Protocol, ARP, request to the first base station, wherein the first ARP request carries an IP address and a Media Access Control, MAC, address that are of the router, so that the first base station determines, according to the IP address of the router, a network segment in which the first base station is located, and selects according to the network segment, the temporary IP address corresponding to the network segment.

## Patentansprüche

1. Basisstation, umfassend:
ein erstes Sendemodul (501) eingerichtet zum Senden einer Internet-Protokoll(IP)-Abfrageanforderung zu einem Router, so dass der Router die IP-Abfrageanforderung zu einem Server senden kann zum Zuteilen einer formellen IP-Adresse für die Basisstation, wobei die IP-Abfrageanforderung Kennzeichnungsinformationen der Basisstation und einer zeitweiligen IP-Adresse der Basisstation umfasst;
ein erstes Empfangsmodul (502) eingerichtet zum Empfangen einer IP-Abfrageanforderungsantwort, die durch den Router gemäß der zeitweiligen IP-Adresse zu der Basisstation weitergeleitet wird, wobei die IP-Abfrageanforderungsantwort die formelle IP-Adresse führt, die gemäß den Kennzeichnungsinformationen der Basisstation durch den Server der Basisstation zugeteilt wird; **gekennzeichnet durch** das Umfassen
eines zweiten Sendemoduls (503) eingerichtet zum Senden einer Versorgungsanforderung zu dem Router, so dass der Router die Versorgungsanforderung zum Server senden kann, wobei die Versorgungsanforderung die formelle IP-Adresse führt; und
eines zweiten Empfangsmoduls (504) eingerichtet zum Empfangen einer Versorgungsantwort, die durch den Router gemäß der formellen IP-Adresse zur Basisstation weitergeleitet wird, wobei die Versorgungsantwort einen Basisstationsstartparameter führt, der durch den Server für die Basisstation eingerichtet ist, wobei das erste Empfangsmodul (502) weiterhin eingerichtet ist zum: bevor das erste Sendemodul (501) die IP-Abfrageanforderung zum Router sendet, Empfangen einer durch den Router gesendeten ersten Adressenauflösungsprotokoll(ARP - Address Resolution Protocol)-Anforderung, wobei die erste ARP-Anforderung eine IP-Adresse und eine Medienzugangssteuerungs(MAC - Media Access Control)-Adresse führt, die des Routers sind; Bestimmen, gemäß der IP-Adresse des Routers, eines Netzabschnitts, in dem sich die Basisstation befindet, und Auswählen gemäß dem Netzabschnitt der zeitweiligen IP-Adresse entsprechend dem Netzabschnitt.

2. Basisstation nach Anspruch 1, wobei das erste Sendemodul (501) weiterhin eingerichtet ist zum: nachdem das erste Empfangsmodul (502) die durch den Router gesendete erste ARP-Anforderung empfängt, Senden einer unnötigen ARP-Antwort zu dem Router gemäß der IP-Adresse des Routers, wobei die unnötige ARP-Antwort eine MAC-Adresse der Basisstation führt.

3. Basisstation nach einem beliebigen der Ansprüche 1 bis 2, wobei die IP-Abfrageanforderungsantwort weiterhin umfasst: Kennzeichnungsinformationen einer weiteren Basisstation, außer der Basisstation, in dem Netzabschnitt, in dem sich die Basisstation befindet, und einer formellen IP-Adresse entsprechend der anderen Basisstation.

4. Basisstation nach einem beliebigen der Ansprüche 1 bis 3, wobei das erste Sendemodul (501) weiterhin eingerichtet ist zum: Senden einer zweiten ARP-Anforderung vor dem Senden der IP-Abfrageanforderung zu dem Router, wobei eine Zieladresse der zweiten ARP-Anforderung die zeitweilige IP-Adresse ist; und wenn eine ARP-Antwort auf die zweite ARP-Anforderung empfangen wird, Wiedersenden der ARP-Anforderung nach einer gesetzten ersten Zeit, bis die ARP-Antwort durch das erste Sendemodul nicht innerhalb einer gesetzten zweiten Zeit empfangen wird.

5. Router, umfassend:
ein erstes Empfangsmodul (601) eingerichtet zum: Empfangen einer durch eine Basisstation gesendeten Internet-Protokoll(IP)-Abfrageanforderung gesendet durch eine Basisstation zum Zuteilen einer formellen IP-Adresse für die Basisstation und Senden der IP-Abfrageanforderung zu einem Server, wobei die IP-Abfrageanforderung Kennzeichnungsinformationen der Basisstation und eine zeitweilige IP-Adresse der Basisstation umfasst;
ein erstes Sendemodul (602) eingerichtet zum Weiterleiten einer IP-Abfrageanforderungsantwort zu der Basisstation gemäß der zeitweiligen IP-Adresse, wobei die IP-Abfrageanforderungsantwort die formelle IP-Adresse führt, die der Basisstation durch den Server zugeteilt wird gemäß den Kennzeichnungsinformationen der Basisstation;
**gekennzeichnet durch** das Umfassen
eines zweiten Empfangsmoduls (603) eingerichtet zum: Empfangen einer durch die Basisstation gesendeten Versorgungsanforderung und Weiterleiten der Startanforderung zu dem Server, wobei die Versorgungsanforderung die formelle IP-Adresse führt; und
eines zweiten Sendemoduls (604) eingerichtet zum Weiterleiten einer Versorgungsantwort zu der Basisstation gemäß der formellen IP-Adresse, wobei die Versorgungsantwort einen Basisstationsstartparameter führt, der durch den Server für die Basisstation eingerichtet ist, wobei das erste Sendemodul (602) weiterhin eingerichtet ist zum: bevor das erste Empfangsmodul (601) die durch die Basisstation gesendete IP-Abfrageanforderung empfängt, Senden einer ersten Adressenauflösungsprotokoll(ARP)-Anforderung zu der Basisstation, wobei die erste ARP-Anforderung eine IP-Adresse und eine Medienzugangssteuerungs(MAC)-Adresse führt, die des Routers sind, so dass die Basisstation gemäß der IP-Adresse des Routers einen Netzabschnitt bestimmt, in dem sich die Basisstation befindet, und Auswählen gemäß dem Netzabschnitt der zeitweiligen IP-Adresse entsprechend dem Netzabschnitt.

6. Basisstationsversorgungsverfahren, umfassend:
Senden (101) durch eine erste Basisstation einer Internet-Protokoll(IP)-Abfrageanforderung zu einem Router, so dass der Router die IP-Abfrageanforderung zu einem Server senden kann zum Zuteilen einer formellen IP-Adresse für die Basisstation, wobei die IP-Abfrageanforderung Kennzeichnungsinformationen der ersten Basisstation und eine zeitweilige IP-Adresse der ersten Basisstation umfasst;
Empfangen (102) durch die erste Basisstation einer IP-Abfrageanforderungsantwort, die durch den Router gemäß der zeitweiligen IP-Adresse zur ersten Basisstation weitergeleitet wird, wobei die IP-Abfrageanforderungsantwort die formelle IP-Adresse führt, die durch den Server gemäß den Kennzeichnungsinformationen der ersten Basisstation der ersten Basisstation durch den Server zugeteilt wird;
**gekennzeichnet durch**
Senden (103) durch die erste Basisstation einer Versorgungsanforderung zu dem Router, so dass der Router die Versorgungsanforderung zum Server senden kann, wobei die Versorgungsanforderung die formelle IP-Adresse führt; und
Empfangen (104) durch die erste Basisstation einer Versorgungsantwort, die durch den Router gemäß der formellen IP-Adresse zur ersten Basisstation weitergeleitet wird, wobei die Versorgungsantwort einen Basisstationsstartparameter führt, der durch den Server für die erste Basisstation eingerichtet ist, wobei vor dem Senden durch eine erste Basisstation einer IP-Abfrageanforderung zu einem Router das Verfahren weiterhin umfasst:
Empfangen durch die erste Basisstation einer ersten, durch den Router gesendeten Adressenauflösungsprotokoll(ARP)-Anforderung, wobei die erste ARP-Anforderung eine IP-Adresse und eine Medienzugangssteuerungs(MAC)-Adresse führt, die des Routers sind;
Bestimmen durch die erste Basisstation gemäß der IP-Adresse des Routers eines Netzabschnitts, in dem sich die erste Basisstation befindet; und
Auswählen durch die erste Basisstation gemäß dem Netzabschnitt der dem Netzabschnitt entsprechenden zeitweiligen IP-Adresse.

7. Verfahren nach Anspruch 6, wobei nach dem Empfangen durch die erste Basisstation einer ersten durch den Router gesendeten ARP-Anforderung das Verfahren weiterhin umfasst:
Senden durch die erste Basisstation gemäß der IP-Adresse des Routers einer unnötigen ARP-Antwort zum Router, wobei die unnötige ARP-Antwort eine MAC-Adresse der ersten Basisstation führt.

8. Verfahren nach einem beliebigen der Ansprüche 6 bis 7, wobei die IP-Abfrageanforderungsantwort weiterhin umfasst: Kennzeichnungsinformationen einer weiteren Basisstation, außer der ersten Basisstation, in dem Netzabschnitt, in dem sich die erste Basisstation befindet, und einer formellen IP-Adresse entsprechend der weiteren Basisstation.

9. Basisstationsversorgungsverfahren, umfassend:
Empfangen (201) durch einen Router einer durch eine erste Basisstation gesendeten Internet-Protokoll(IP)-Abfrageanforderung zum Zuteilen einer formellen IP-Adresse für die Basisstation und Senden der IP-Abfrageanforderung zu einem Server, wobei die IP-Abfrageanforderung Kennzeichnungsinformationen der ersten Basisstation und eine zeitweilige IP-Adresse der ersten Basisstation umfasst;
Weiterleiten (202) durch den Router gemäß der zeitweiligen IP-Adresse einer IP-Abfrageanforderungsantwort zu der ersten Basisstation, wobei die IP-Abfrageanforderungsantwort die formelle IP-Adresse führt, die durch den Server gemäß den Kennzeichnungsinformationen der ersten Basisstation der ersten Basisstation zugeteilt ist;
**gekennzeichnet durch** das Umfassen von
Empfangen (203) durch den Router einer durch die erste Basisstation gesendeten Versorgungsanforderung und Weiterleiten der Versorgungsanforderung zum Server, wobei die Startanforderung die formelle IP-Adresse führt; und
Weiterleiten (204) durch den Router gemäß der formellen IP-Adresse einer Versorgungsantwort zu der ersten Basisstation, wobei die Versorgungsantwort einen durch den Server für die erste Basisstation eingerichteten Basisstationsstartparameter führt, wobei vor dem Empfangen durch einen Router einer durch eine erste Basisstation gesendeten IP-Abfrageanforderung das Verfahren weiterhin umfasst:
Senden durch den Router einer ersten Adressenauflösungsprotokoll(ARP)-Anforderung zu der ersten Basisstation, wobei die erste ARP-Anforderung eine IP-Adresse und eine Medienzugangssteuerungs(MAC)-Adresse führt, die des Routers sind, so dass die erste Basisstation gemäß der IP-Adresse des Routers einen Netzabschnitt bestimmt, in dem sich die erste Basisstation befindet, und gemäß dem Netzabschnitt die zeitweilige IP-Adresse entsprechend dem Netzabschnitt auswählt.

## Revendications

1. Station de base, comprenant :
un premier module d'envoi (501), configuré pour envoyer une requête de demande de protocole Internet, IP, à un routeur pour que le routeur puisse envoyer la requête de demande IP à un serveur, d'attribution d'une adresse IP formelle à la station de base, la requête de demande IP comportant des informations d'identification de la station de base et une adresse IP temporaire de la station de base ;
un premier module de réception (502), configuré pour recevoir une réponse à la requête de demande IP qui est transmise par le routeur à la station de base selon l'adresse IP temporaire, la réponse à la requête de demande IP contenant l'adresse IP formelle qui est attribuée par le serveur à la station de base selon les informations d'identification de la station de base ; **caractérisée en ce qu'**elle comprend un deuxième module d'envoi (503), configuré pour envoyer une requête de provisionnement au routeur pour que le routeur puisse envoyer la requête de provisionnement au serveur, la requête de provisionnement contenant l'adresse IP formelle ; et
un deuxième module de réception (504), configuré pour recevoir une réponse de provisionnement qui est transmise par le routeur à la station de base selon l'adresse IP formelle, la réponse de provisionnement contenant un paramètre de démarrage de station de base qui est configuré par le serveur pour la station de base, le premier module de réception (502) étant en outre configuré pour : avant que le premier module d'envoi (501) n'envoie la requête de demande IP au routeur, recevoir une première requête de protocole de résolution d'adresses, ARP, envoyée par le routeur, la première requête ARP contenant une adresse IP et une adresse de contrôle d'accès au support, MAC, qui appartiennent au routeur ; déterminer, selon l'adresse IP du routeur, un segment de réseau dans lequel la station de base est située ; et
sélectionner, selon le segment de réseau, l'adresse IP temporaire correspondant au segment de réseau.

2. Station de base selon la revendication 1, dans laquelle le premier module d'envoi (501) est en outre configuré pour : après que le premier module de réception (502) a reçu la première requête ARP envoyée par le routeur, envoyer une réponse ARP gratuite au routeur selon l'adresse IP du routeur, la réponse ARP gratuite contenant une adresse MAC de la station de base.

3. Station de base selon l'une quelconque des revendications 1 à 2, dans laquelle la réponse à la requête de demande IP comprend en outre : des informations d'identification d'une autre station de base, excepté la station de base, dans le segment de réseau dans lequel la station de base est située, et une adresse IP formelle correspondant à la une autre station de base.

4. Station de base selon l'une quelconque des revendications 1 à 3, dans laquelle le premier module d'envoi (501) est en outre configuré pour: envoyer une deuxième requête ARP avant d'envoyer la requête de demande IP au routeur, une adresse de destination de la deuxième requête ARP étant l'adresse IP temporaire ; et si une réponse ARP à la deuxième requête ARP est reçue, renvoyer la requête ARP après un premier temps défini, jusqu'à ce que la réponse ARP ne soit pas reçue par le premier module d'envoi dans un deuxième temps défini.

5. Routeur, comprenant :
un premier module de réception (601), configuré pour : recevoir une requête de demande de protocole Internet, IP, envoyée par une station de base d'allocation d'une adresse IP formelle à la station de base, et envoyer la requête de demande IP à un serveur, la requête de demande IP comportant des informations d'identification de la station de base et une adresse IP temporaire de la station de base ;
un premier module d'envoi (602), configuré pour transmettre une réponse à la requête de demande IP à la station de base selon l'adresse IP temporaire, la réponse à la requête de demande IP contenant l'adresse IP formelle qui est attribuée par le serveur à la station de base selon les informations d'identification de la station de base ;
**caractérisé en ce qu'**il comprend
un deuxième module de réception (603), configuré pour : recevoir une requête de provisionnement envoyée par la station de base, et transmettre la requête de démarrage au serveur, la requête de provisionnement contenant l'adresse IP formelle ; et
un deuxième module d'envoi (604), configuré pour transmettre une réponse de provisionnement à la station de base selon l'adresse IP formelle, la réponse de provisionnement contenant un paramètre de démarrage de station de base qui est configuré par le serveur pour la station de base, le premier module d'envoi (602) étant en outre configuré pour : avant que le premier module de réception (601) ne reçoive la requête de demande IP envoyée par la station de base, envoyer une première requête de protocole de résolution d'adresses, ARP, à la station de base, la première requête ARP contenant une adresse IP et une adresse de contrôle d'accès au support, MAC, qui appartiennent au routeur, pour que la station de base détermine, selon l'adresse IP du routeur, un segment de réseau dans lequel la station de base est située, et sélectionner, selon le segment de réseau, l'adresse IP temporaire correspondant au segment de réseau.

6. Procédé de provisionnement de station de base, comprenant les étapes suivantes :
envoyer (101), par une première station de base, une requête de demande de protocole Internet, IP, à un routeur pour que le routeur puisse envoyer la requête de demande IP à un serveur, d'attribution d'une adresse IP formelle à la station de base, la requête de demande IP comportant des informations d'identification de la première station de base et une adresse IP temporaire de la première station de base ;
recevoir (102), par la première station de base, une réponse à la requête de demande IP qui est transmise par le routeur à la première station de base selon l'adresse IP temporaire, la réponse à la requête de demande IP contenant l'adresse IP formelle qui est attribuée par le serveur à la première station de base selon les informations d'identification de la première station de base ;
**caractérisé par**
envoyer (103), par la première station de base, une requête de provisionnement au routeur, pour que le routeur puisse envoyer la requête de provisionnement au serveur, la requête de provisionnement contenant l'adresse IP formelle ; et
recevoir (104), par la première station de base, une réponse de provisionnement qui est transmise par le routeur à la première station de base selon l'adresse IP formelle, la réponse de provisionnement contenant un paramètre de démarrage de station de base qui est configuré par le serveur pour la première station de base, avant l'étape consistant à envoyer, par une première station de base, une requête de demande IP à un routeur, le procédé comprenant en outre :
recevoir, par la première station de base, une première requête de protocole de résolution d'adresses, ARP, envoyée par le routeur, la première requête ARP contenant une adresse IP et une adresse de contrôle d'accès au support, MAC, qui appartiennent au routeur ;
déterminer, par la première station de base selon l'adresse IP du routeur, un segment de réseau dans lequel la première station de base est située ; et
sélectionner, par la première station de base selon le segment de réseau, l'adresse IP temporaire correspondant au segment de réseau.

7. Procédé selon la revendication 6 dans lequel, après l'étape consistant à recevoir, par la première station de base, une première requête ARP envoyée par le routeur, le procédé comprend en outre :
envoyer, par la première station de base selon l'adresse IP du routeur, une réponse ARP gratuite au routeur, la réponse ARP gratuite contenant une adresse MAC de la première station de base.

8. Procédé selon l'une quelconque des revendications 6 à 7, dans lequel la réponse à la requête de demande IP comprend en outre : des informations d'identification d'une autre station de base, excepté la première station de base, dans le segment de réseau dans lequel la première station de base est située, et une adresse IP formelle correspondant à la une autre station de base.

9. Procédé de provisionnement de station de base, comprenant les étapes suivantes :
recevoir (201), par un routeur, une requête de demande de protocole Internet, IP, envoyée par une première station de base d'attribution d'une adresse IP formelle à la station de base, et envoyer la requête de demande IP à un serveur, la requête de demande IP comportant des informations d'identification de la première station de base et une adresse IP temporaire de la première station de base ;
transmettre (202), par le routeur selon l'adresse IP temporaire, une réponse à la requête de demande IP à la première station de base, la réponse à la requête de demande IP contenant l'adresse IP formelle qui est attribuée par le serveur à la première station de base selon les informations d'identification de la première station de base ;
**caractérisé en ce qu'**il comprend
recevoir (203), par le routeur, une requête de provisionnement envoyée par la première station de base, et transmettre la requête de provisionnement au serveur, la requête de démarrage contenant l'adresse IP formelle ; et
transmettre (204), par le routeur selon l'adresse IP formelle, une réponse de provisionnement à la première station de base, la réponse de provisionnement contenant un paramètre de démarrage de station de base configuré par le serveur pour la première station de base, avant l'étape consistant à recevoir, par un routeur, une requête de demande IP envoyée par une première station de base, le procédé comprenant en outre :
envoyer, par le routeur, une première requête de protocole de résolution d'adresses, ARP, à la première station de base, la première requête ARP contenant une adresse IP et une adresse de contrôle d'accès au support, MAC, qui appartiennent au routeur, pour que la première station de base détermine, selon l'adresse IP du routeur, un segment de réseau dans lequel la première station de base est située, et sélectionne, selon le segment de réseau, l'adresse IP temporaire correspondant au segment de réseau.
